Europäisches Patentamt

European Patent Office

Office européen des brevets

(11) Publication number: **0 148 315**
A1

## EUROPEAN PATENT APPLICATION

(21) Application number: **84107840.5**

(22) Date of filing: **05.07.84**

(51) Int. Cl.⁴: **B 23 K 9/08**

(43) Date of publication of application: **17.07.85**
Bulletin 85/29

(84) Designated Contracting States: **DE GB SE**

(71) Applicant: **Pan, Jiluan, Tsinghua Yuan Beijing (Peking) (CN)**
Applicant: **Zhang, Renhao, Tsinghua Yuan Beijing (Peking) (CN)**
Applicant: **Ou, Zhiming, Tsinghua Yuan Beijing (Peking) (CN)**
Applicant: **Wu, Zhiquang, Tsinghua Yuan Beijing (Peking) (CN)**

(72) Inventor: **Pan, Jiluan, Tsinghua Yuan Beijing (Peking) (CN)**
Inventor: **Zhang, Renhao, Tsinghua Yuan Beijing (Peking) (CN)**
Inventor: **Ou, Zhiming, Tsinghua Yuan Beijing (Peking) (CN)**
Inventor: **Wu, Zhiquang, Tsinghua Yuan Beijing (Peking) (CN)**

(74) Representative: **Müller, Hans-Jürgen, Dipl.-Ing. et al,**
**Müller, Schupfner & Gauger**
**Lucile-Grahn-Strasse 38 Postfach 80 13 69,**
**D-8000 München 80 (DE)**

(54) Method of controlling the output characteristic of a welding power source, apparatus for arc welding and electrical circuit to be used for such apparatus.

(57) A method and apparatus for arc welding particularly involves a pulse arc welding machine comprising a welding power source and a wire feeding unit, which consists of an output characteristic control circuit, an over-load protection circuit, a driving circuit and a power main circuit for the former and a wire feeding control circuit, a motor driving circuit and a wire feed motor for the latter. A welding arc adaptive control system which can make the power source possess a multi-segmental and moving output characteristic with varying slope, is used for the machine. Furthermore, an auto-transfer circuit for connecting arbitrary number of segments with arbitrary or varying slope and a scanning circuit for obtaining the segment with varying slope have been put foreward. Particularly a self-adaptive controlled GMA welding machine with one-knob control of wire feed rate without necessity of adjusting other welding parameters is easy to operate.

Telefon: (0 89) 4 70 60 55/56
Telex: 5 23016
Telegramm / cable:
Zetapatent® München

Postfach 80 13 69
Lucile-Grahn-Straße 38
D-8000 München 80

Hans-Jürgen Müller
Gerhard D. Schupfner
Hans-Peter Gauger
Patentanwälte
European Patent Attorneys
Mandataires en brevets européens

- 1 -

Pan, Zhang, Ou, and Wu
2856. PT-EP

SPECIFICATION

The invention relates to a method of controlling the output characteristic (UI-characteristic) of a welding power source as well as to an apparatus for arc welding, particularly to a self-adaptive controlled pulse GMA-welding machine, as well as to an electrical circuit to be used for such apparatus.

In conventional GMA welding machines a flat or a drooping or a slightly uprising output characteristic of the power source is always used in order to get the effects of stronger arc self-adjust ability, stable arc and spray metal transfer. But, in fact, the problem simultaneously satisfying both contradictory requirements of arc self-adjust ability and stable metal transfer mode has not been solved as yet.

In last years, the GMA pulse arc welding machine using two output characteristics in combination or non-linear output characteristic has been exploited, which utilizes a steeply drooping output characteristic for maintaining the background arc stable and a compulsary pulse arc in flat characteristic for spray metal transfer. Therefore, the melting rate of wire can be adjusted more flexibly by varying these 4 parameters-duration and amplitude of the pulse current and base current separately. The adaptable range of welding current is much wider than that of non-pulsing welding process. These 4 welding parameters mentioned above must be preset firstly in order to set the wire feed rate so that the setting work is very complicated. Unproper selection of these parameters will result in unstable even extinguished arc. The next problem is the worse self-adjust ability in the arc length due to the reason that it has a steeply drooping characteristic for base current duration. The third problem is the inevitable fluctuation of the pulse current amplitude so that a stable spray metal transfer could not be kept.

M. Amin put forward a method named "Synergic pulse MIG welding" ("Metal Construction" June 1981) using an electronic control system to link the wire feed rate with the 4 welding parameters mentioned above, i.e. once wire feed rate is chosen, all four parameters will be determined automatically by the electronic circuit. However, there is no correlation between the arc length and arc parameters, so that any arc length disturbance from factors other than wire feed rate changing will destroy the arc burning stability.

Furthermore, it is known (EP-A- 81 105 288.5, Ueguri et al) to control the power source of a pulse welding machine by linking the arc voltage and current with the four welding parameters, in order to self-adjust the welding parameters during the welding process. However, due to the result of using an integrated circuit for detecting the arc length, the transient response to the arc length disturbances worsen and the arc self-adjust ability declined.

The object of the invention is to facilitate to solve the problems mentioned above.

- 3 -

The invention is claimed in claims 4 and 9 and further embodiments are claimed and sub-claims and/or are described in the following specification.

The self-adaptive controlled pulse welding machine (TSAD welding machine for short below) according to the present invention uses a welding arc adaptive control system which makes the power source be multi-segmental and moving output characteristics with varying slope so as to enable the welding arc always at the optimum state. Thus, the contradictory problems between the arc self-adjust ability and the stable spray metal transfer, existing in the previous welding machines, are solved.

The multi-segmental output characteristic mentioned above includes three main sections: one of them is a skew segment inclining slightly to the left with the vertical for maintaining the background arc fully stable, the other is a vertical segment for keeping the pulse arc current at constant value to maintain stable spray metal transfer, and the third is a segment with varying slope and used for accelerating the arc transient between base current and pulse current. The multi-segmental output characteristic is set up by connecting those three segments with no-load point and short circuit output characteristic.

The moving characteristic with varying slope mentioned above is the own feature in the invented TSAD welding machine. In order to gain this feature, a scanning circuit in the above control system is developed, which is trigger sweeped by upper and lower thresholds of the arc length or arc voltage and acts according to the slight increment or decrement of arc current, causing that the faster the arc current variation, the further higher the power source voltage than the voltage drop in arc, and inversely is also true, then the arc transient toward to the pulse current or to the base current inversely can be completed very fast. This is quite different from that of previous welding machines. The developed scanning circuit is one of the major circuit in the invented welding machine, as has the self-adaptive ability in arc. Another feature in the invented TSAD welding machine is that an auto-transfer circuit for forming the multi-segment output characteristic in above control system has been developed, which can connect arbitrary number of segments with arbitrary or varying slope into an arbitrary multi-segmental output characteristic, so that a power source with multi-segmental output characteristic can be realized.

The wire feeding control circuit in the control system of the TSAD welding machine is different from that of the previous welding machine. It can carry out the compensation for arc length following the variation of wire feed rate automatically, so that the optimum spray metal transfer can be ensured.

The transistorized power source can adjust the output current and voltage automatically, because of the ability in detecting and controlling the arc length by itself without any extra circuit like that of in previous welding machine, so that the arc always works at the optimum state.

Due to the multi-segment output characteristic in TSAD welding machine, utilizing different current and voltage to the background and pulse stage, the dissipated power loss in the power main circuit is limited.

The TSAD welding machine is used in GMA welding and the advantages are as follows: stable welding arc, optimum spray metal transfer without spattering, capability of realizing welding, with pulsed or programmed wire feed, one-knob control of wire feed rate without necessity of adjusting other welding parameters so it is easy to operate.

Due to above features, TSAD pulse welding machine according to the present invention not only has the potential combining with robots and also can develop for use in: welding with bead penetration and profile control, welding with heat input control, welding of Al and Al-alloys with mesospray metal transfer mode and $CO_2$ welding.

To enable the invention to be fully understood, it will now be described with reference to the following accompanying drawings in which:

Fig. 1    is a block diagram illustrating the TSAD welding machine;

Fig. 2    is a circuit diagram illustrating a welding power source of the TSAD welding machine;

Fig. 3    is a diagram illustrating a multi-segmental and moving output characteristic with varying slope of the welding power source as shown in Fig. 2;

Fig. 4    is a diagram illustrating an automatic transfer circuit for the multi-segmental characteristic of welding power source as shown in Fig. 3;

Fig. 5    is a circuit diagram illustrating the moving output characteristic with varying slope of welding power source;

Fig. 6    is a circuit diagram illustrating the automatic transfer for the output characteristic with arbitrary number of segments;

Fig. 7     is a diagram illustrating the output characteristic with arbitrary number of segments formed by the circuit of Fig. 6; and

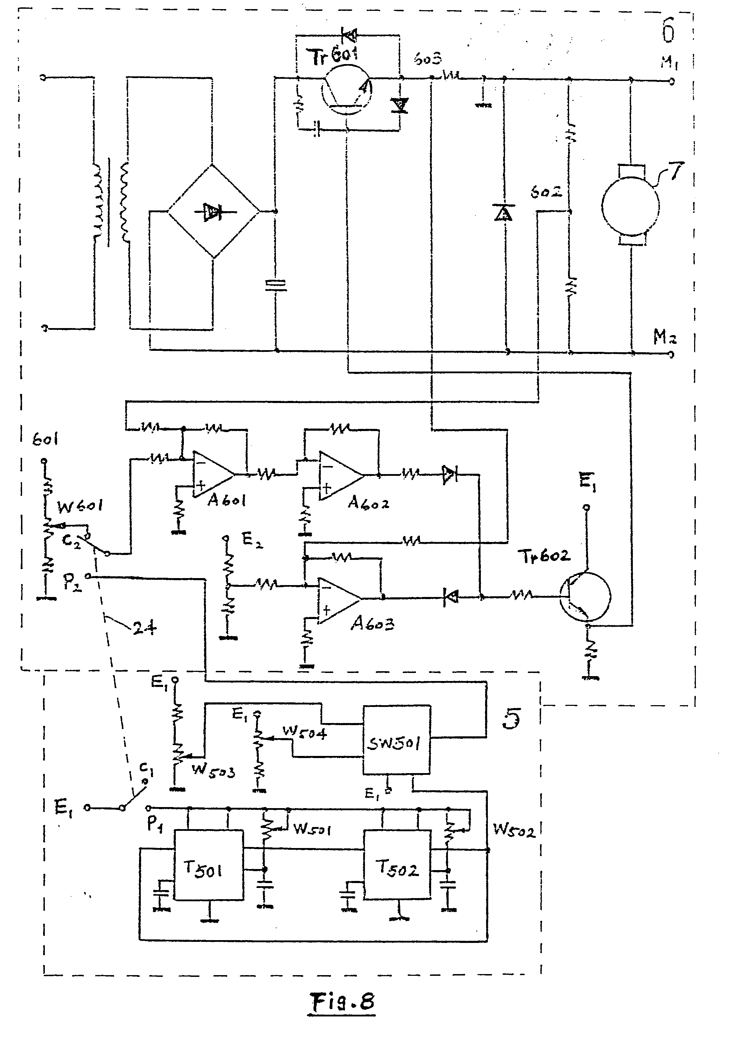

Fig. 8     is a circuit diagram illustrating the wire feeding unit of TSAD welding machine.

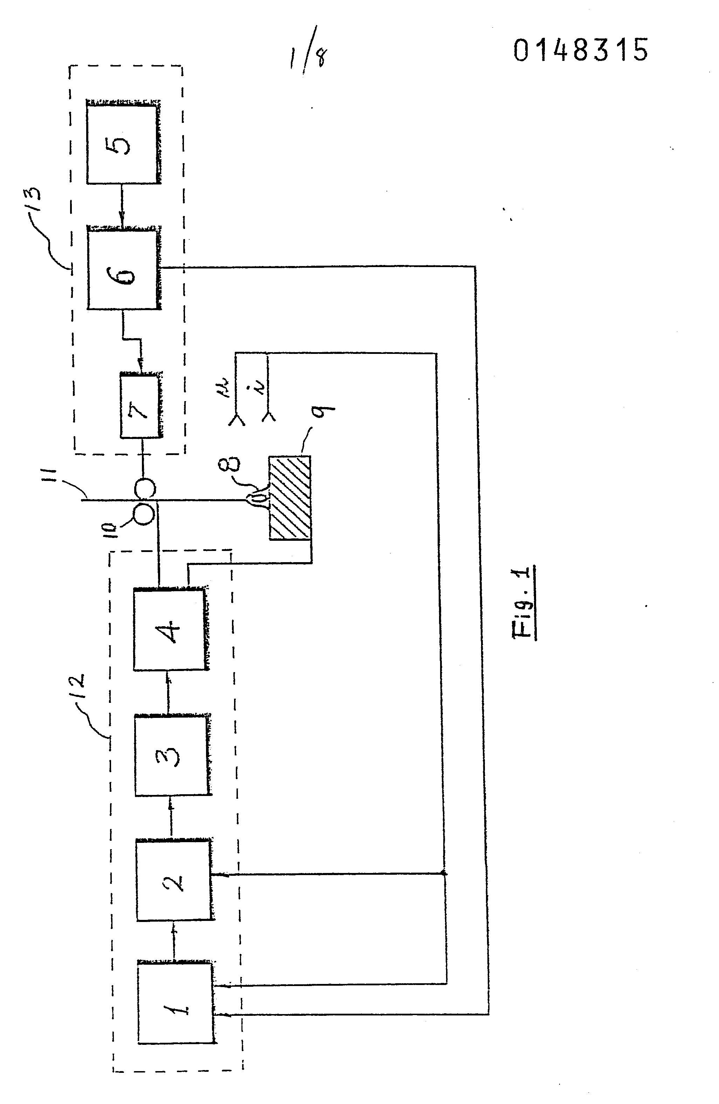

As shown in Fig. 1 the present invention e.g. named "TSAD welding machine" comprises a welding power source 12 having an output characteristic control circuit 1, an overload protection circuit 2, a driving circuit 3 and a power main circuit 4, and a wire feeding unit 13 having a pulsed wire feeding circuit 5, a motor driving circuit 6 and a wire feed motor 7. The wire 11 is being moved in the direction to the metal part 9 to be welded by a feeding unit 10 controlled by the wire feed motor 7. The output characteristic control circuit 1 is supplied by an electrical voltage u and current i, respectively. The output of the power main circuit 4 is connected to the wire 11 and to the metal part 9 in order to create an arc 8 between the latter. The above parts form a welding arc adaptive control system.

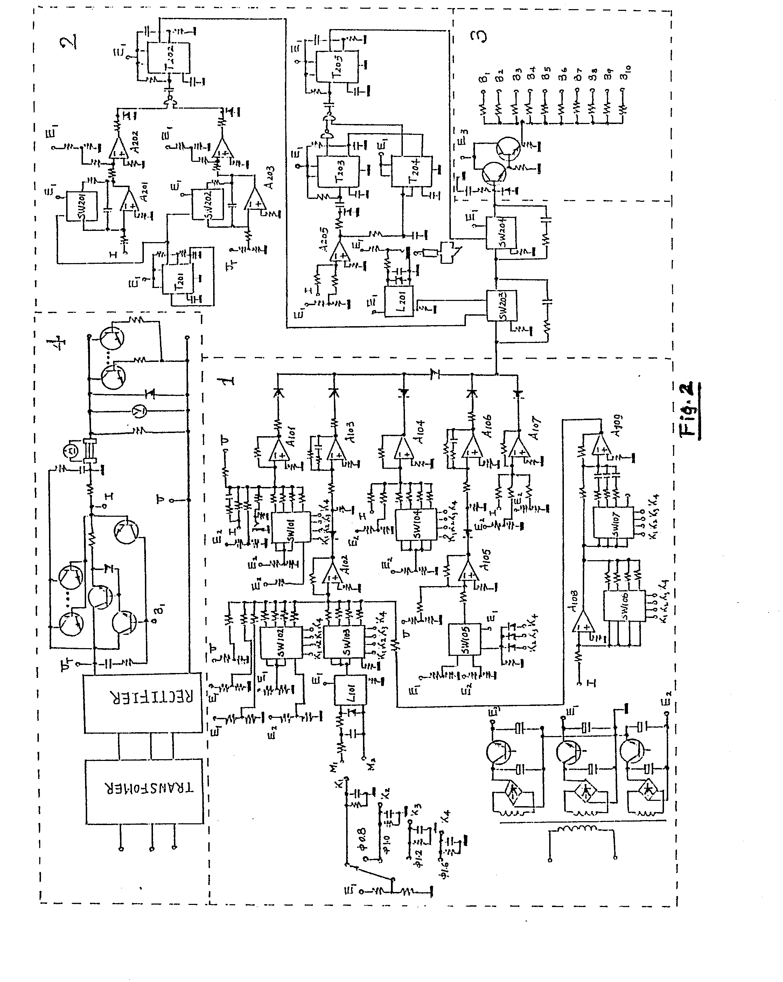

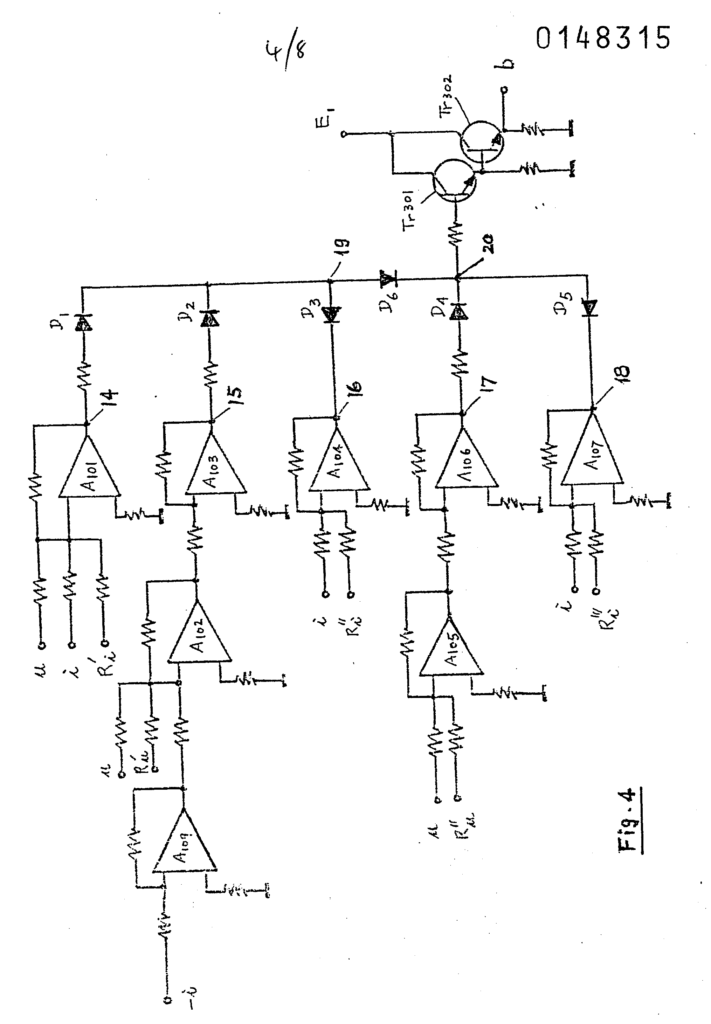

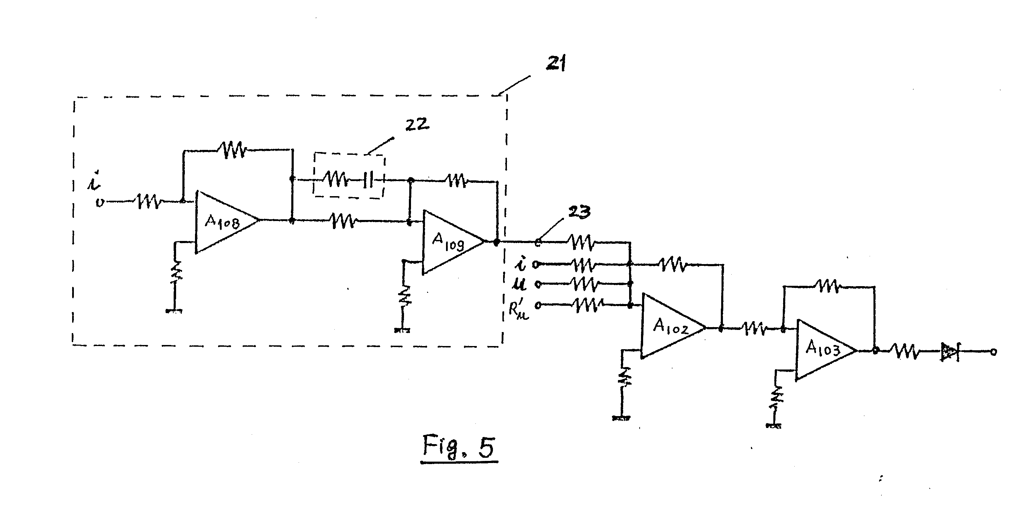

With reference to Fig. 2, as mentioned above the output characteristic control circuit comprises an electrical automatic transfer circuit for the multi-segmental characteristic of welding power source as shown in Fig. 4 and a scanning circuit for the moving output characteristic with varying slope as shown in Fig. 5. It can be seen in Fig. 2 (which is self-describing and further described below) and 8 that in the power main circuit of TSAD welding machine there is no inertial element except the inevitable loop of the welding cables, the dynamic property of the control system of said machine is therefore excellent.

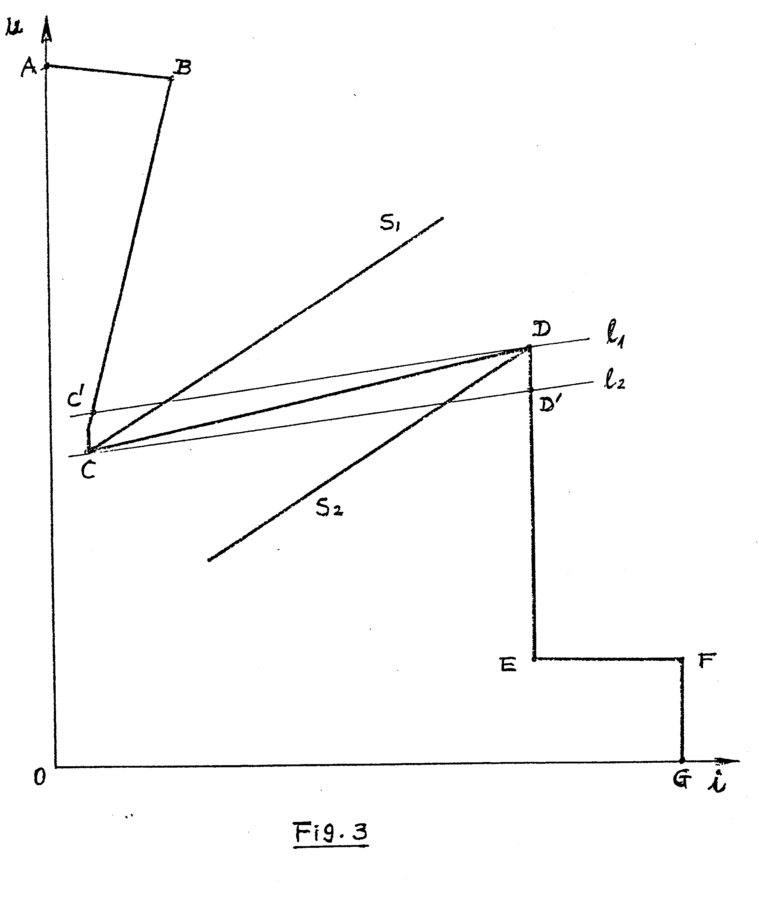

As illustrated in Fig. 3, the multi-segmental and moving output characteristic with varying slope of the welding power source consists of five basic output characteristic segments in which: A is the open circuit point (no-load point); BC is a segment slightly inclined to left with respect to the vertical segment for keeping background arc fully stable; CD is a segment between $l_1$ (upper threshold of arc length) and $l_2$ (lower threshold of arc length), which having varying slope for accelerating the arc transient between base current and pulse current; DE is a vertical segment for keeping the pulse arc current at constant level; EF and FG are segments for controlling short circuit voltage and current; G is the short circuit point. As stated above the segments of BC, CD and DE are the main parts of output characteristic of the power source. In conventional welding machines the base current is decreased when arc length becomes larger. However, in the present invention due to the action of segment BC the higher the arc voltage or the longer the arc length, the greater will be the amplitude of the base current so as to ensure the stability of the background arc. The CD output characteristic segment is inclined between $l_1$ (upper threshold of arc length) and $l_2$ (lower threshold of arc length) and it scans due to the slight increment or decrement of arc current. The scanning locus moves from segment CD to S1 or from segment CD to S2 and thus it realizes the moving output characteristic with varying slope. The action is described below. Assuming that the arc length is $l_1$ at the first moment, and the arc operating point is at C' and the welding current at this stage is very low the arc 8 will only keep its burning and no metal transfer will proceed. Therefore the arc length tends to decrease and the arc operating point goes downward from C' to C. Once it reaches C the trigger sweep occurs immediately at the segment CD which following the variation of base current. In the scanning process, the output voltage of power source further than the voltage drop of arc so the arc operating point jumps promptly from C to D'. The welding current becomes now very high, so that metal transfer starts with predetermined mode and the arc length increases. Once it reaches point D, by means of scanning action of the segment DC, the output voltage of power source is further lower than the voltage drop of arc, so that the arc operating point jumps promptly from D to C'. The above process is automatically repeated, and in this case the arc length varies in the interval of $\Delta l$ from $l_1$ to $l_2$ and the arc operating point moves along the path on the edges of a trapezoid of C'CD'DC', so that the output of the welding power source changes automatically according to the fluctuation of arc length. Advantages of the said characteristic may be summaried below. Firstly, the arc length is kept exactly in the interval between $l_1$ and $l_2$, the difference of which $\Delta l$ is usually designed to equal to the wire diameter. The absolute value of $l_1$, $l_2$, and $\Delta l$ may be adjusted by changing the parameters and position of trapezoid C'CD'DC'. Secondly, metal transfer proceeds at a constant current condition, the magnitude of which can be present by the parameter of the segment DE. Therefore optimum spray transfer mode can be easily ensured. Thirdly, the current level of arc changes automatically according to the arc length, which is essentially different from the compulsory pulsed arc welding or closed loop control MIG welding. Fourthly, the pulsed arc can adapt itself to any change of wire feed rate and respond quickly to any kind of arc length disturbance. This is the very reason that one may easily realize one-knob controlled welding machine and pulsed wire feed welding technology.

With reference to Fig. 4, the control circuit having operational amplifier A101 is used to obtain a constant current or vertical output characteristic (where Ri is the reference of current, i-signal of welding current, u-signal of output arc voltage). It should be noted that a third input was designed for the operational amplifier A101, the signal for it is the arc voltage ($\pm$u). The output characteristic of the power source becomes then inclined to the vertical axis, the slope of it may be adjusted to be positive or negative, greater or smaller depending on the polarity and magnitude of the signal ($\pm$u). In the control circuit having operational amplifiers A102 and A103 R'u designates reference value for the arc voltage. Similarly a third signal ($\pm$i) is put into the operational amplifier A102, which makes the flat characteristic incline either upward or downward depending on the polarity and magnitude of the signal ($\pm$i). By use of the above two control circuits, the individual segments of output characteristic of power source can be realized, but how to connect these segments into a complete characteristic as shown in Fig. 3 will be a key of the present invention.

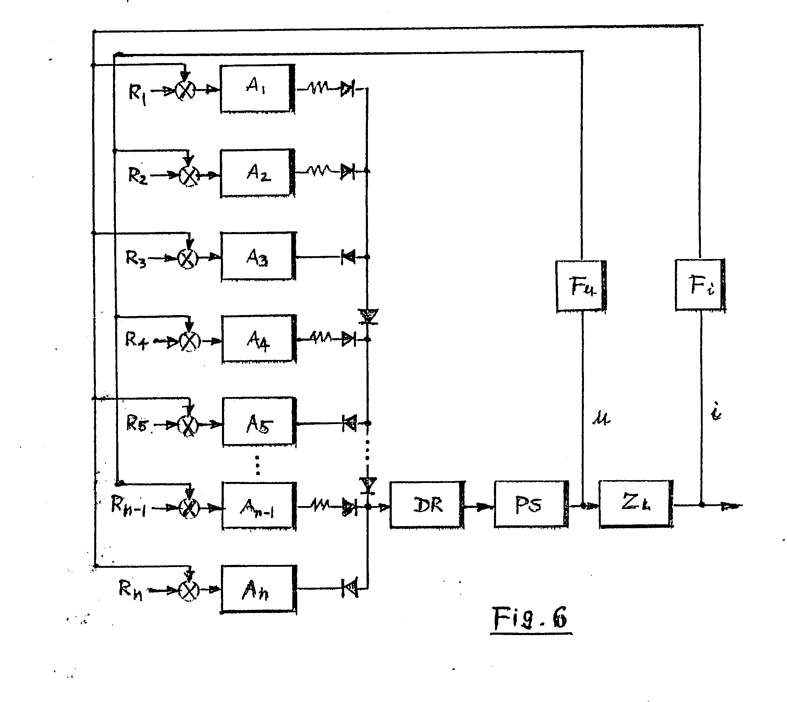

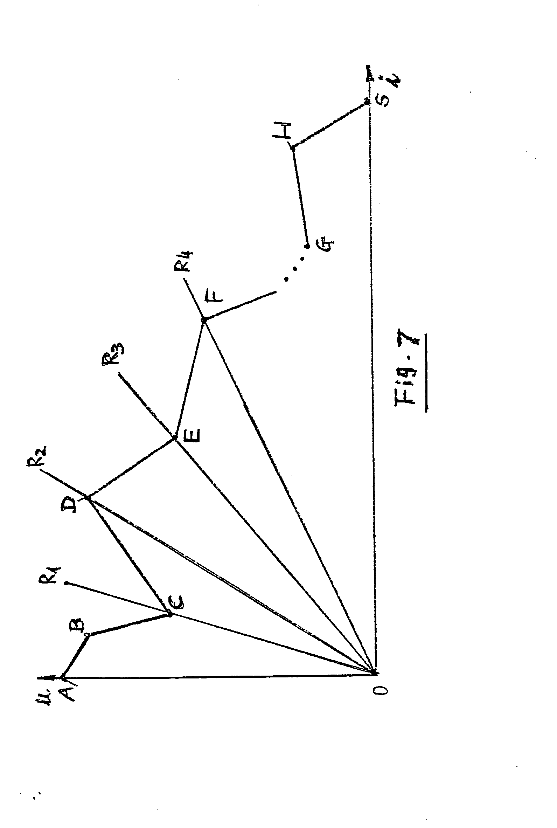

If used the method of conventional detecting and control circuit for electronic switching, a series of problems would happen. For example, due to static error of closed loop feedback and the variation of position and slope of segments, it is very difficult to tally the transfer point and the real crossover point. When error of the connecting point between the transfer point and the real crossover point of segments of output characteristic happens, the dead zone, overlap zone or oscillation zone will occur near by the crossover point of the segments, and the performance of the multi-segmental output characteristic will be bad. TSAD welding machine using an automatic transfer circuit which is fully difference with the prior art. This circuit utilizes the function of feedback and a diode group to realize the automatic transfer between the segments with different slope. It will be described in more detail below. As shown in Fig. 4, the automatic transfer circuit comprises five feedback circuits (A101 through A107 are operational amplifiers, $R_i'$, $R_i''$ and $R_i'''$ are references for the welding current, $R_u'$ and $R_u''$ designate references for the arc voltage, u is a feedback signal of arc voltage, i is a feedback signal of welding current, b is an output to the base of power transistor array). With reference to Fig. 3, the first circuit having A101 is used for obtaining the segment BC of output characteristic, the second circuit having A102 and A103 is used for obtaining the segment CD, the third circuit having A104 is used for obtaining the segment DE, the fourth circuit having A105 and A106 is used for obtaining the segment EF, the fifth circuit having A107 is used for obtaining the segment FG. Assume, the arc operating point is on the segment BC, then the first feedback loop is in operation, the potential level at terminal 14 is positive. In the second feedback loop, due to the fact that $|u| \gg |R_u'|$, the potential level at 15 is in the negative saturation in the third one as $|R_i''| \gg |i|$, output potential at 16 is in the positive saturation. Similarly potential level at 17 is in the negative saturation, at 18 is in the positive saturation. It can be seen that all the feedback loops are blocked off by the diodes D2, D3, D4 and D5 except the first one. Should the arc operating point move to segment CD, the output potential of first loop at 14 becomes negative because of $|i| \gg |R_i'|$. Second loop becomes in operation and the potential at its output 15 is positive. The outputs of other three loops remain the same as just mentioned above i.e. positive at 16, negative at 17 and positive at 18. Therefore all feedback loops are blocked off except the second one. Third loop comprises a clamper circuit which consists of diodes. Principle of operation of the third loop is different in nature from the first and second one. When the arc operating point is working on the segment DE, the third loop starts to work, the potential at 16 is positive. But the potential at 14 remains negative, 15 - positive, 17 - negative, 18 - positive. Therefore it can be inferred that only the first, fourth and fifth loops are blocked off. But the second loop can not be blocked due to its positive output. The output signal at 19 is controlled by the clamper potential at 16 rather than the output potential at 15. When the arc operating point goes further and exceeds E on the segment EF, the output potential of the third loop is in the negative saturation, it clamps the potential at 20 at negative level, and the diode D6 blocked off the upper three loops. The fourth loop goes into action and operates just like the second one when the arc is on the segment EF, the fifth loop has the same operation as the third loop when arc operating point is on the segment FG. In other words the fourth and fifth loop may be considered as independent one as the third loop clamps the potential 20 at saturated negative level and D6 blocks all the upper loops, when the arc operating point enters the segment EF. In addition, practically applying the principle of this invention the automatic transfer circuit as shown in Fig. 4 can be expanded to generate very complicate output characteristic. With the automatic transfer circuit shown in Fig. 6 one can easily obtain a multi-segmental output characteristic with arbitrary number of segments as shown in Fig. 7 provided that the welding current references $R'_i$, $R''_i$ and $R'''_i$ are progressively increased and the welding voltage references $R'_u$, $R''_u$ and $R'''_u$ are progressively decreased.

Referring to Fig. 5, a scanning circuit is designed for realizing the moving output characteristic with varying slope. In Fig. 3 the segment CD controlled by $l_1$ the upper allowed limit of arc length and $l_2$ the lower allow-

ed limit of arc length represents the moving output characteristic with varying slope. There is an additional
input signal 23 to operational amplifier A102 from the
scanning circuit 21. The said scanning circuit 21 consists of three parts, namely, an operational amplifier
A108, a phase reverser A109 and a differential circuit 22.
Should the arc operating point stay at constant current
condition the scanning circuit 21 plays no role on the
feedback loop, A108 and A109 just output a signal of constant amplitude to A102 which has the effect of increasing
very slightly the slope of the segment CD. But in fact
when the arc operating point touches C from C', the arc
current increases quickly along the arc static characteristic CD', then the scanning circuit differentiates
the value of welding current. The amplified current increment or decrement from the differential detecting
circuit sends to terminal 23 as an input of A102 which
has scanning feature so make the output of A109 produce
a varying slope. When arc operating point jumps from C to
D', the changing rate of welding current is increasing
at first and decreasing afterwards, so the output of A109
at 23 increases at first and decreases afterwards. This
result is a scanning action of the segment CD is the
counter-clockwise direction at first and clockwise
direction afterwards. Similarly when the arc operating
point transfers from D to C', the arc current tends to
decrease along the arc characteristic DC', the amplified
increment or decrement is sent to point 23 by the scanning
circuit and makes the segment DC scan as described before.

With reference the wire feeding unit 13 as shown in Fig.
8 in which the speed of wire feeding motor 7 is controlled
by transistor Tr601. In order to improve the mechanical
property of wire feeding unit, the negative feedback of
armature voltage is introduced into motor driving circuit 6. The armature voltage indicating wire feeding

speed by terminals $M_1$ and $M_2$ connects to terminals $M_1$ and $M_2$ of the circuit for controlling output characteristic. It makes the segment CD of the output characteristic as shown in Fig. 3 move upward in accordance with the increase of wire feed rate and causes the welding arc length to become a little higher, and thus a certain compensation for arc length is obtained. In order to prevent the damage of armature and transistors from over-load a negative feedback at terminal 602 is used. The output current amplitude from transistor Tr602 is limited by amplifier A603. In the case of constant wire feed rate the switch 24 is set at terminal $C_1$ and $C_2$. The wire feed rate is adjusted by potentiometer W601. In the case of pulsed wire feed welding, the switch 24 should set at terminal $P_1$ and $P_2$. The pulse generator consists of monostable triggers T501 and T502. The electronic analogue switch SW501 is controlled by T502 and connect those afforded references of different wire feed rate respectively. The pulsed wire feed rate arc adjusted by potentiometers W503 and W504 respectively. The durations of higher and lower level is adjusted by potentiometers W501 and W502 respectively. The voltage signal of wire feed function can be input through terminal 603 during programmed wire feed welding (in this case switch 24 is set at terminals $C_1$ and $C_2$).

The TSAD welding machine has been conducted repeatedly with 1.0, 1.2 and 1.6 mm dia. steel wire 11 in Ar and $CO_2$ mixed gas. Spray transfer arc can be obtained over wide range of welding current as indicated in Table 1. is the aspect of saving electrical energy, as the operating point of arc is alternatively at two points, one on the lower part of segment BC and the other on the upper part of segment DE. In the former case the voltage drop across the transistor array is high but the current passing through it is very low. In the latter case the current passing through it is very high, but the voltage drop across it is very low therefore the total power loss is very low. It should be pointed out also, that due to TSAD welding machine is beneficial for MIG welding with very stable welding arc and spray metal transfer without spattering over wide range of welding current. In addition, TSAD welding machine is suitable for pulsed wire feed welding and programmed wire feed welding and besides it is a one-knob control welding machine without necessity of adjusting other welding parameters and easy for operation.

The TSAD welding machine can also be used with welding robots and developed to apply in the field of the bead penetration or profile control welding, welding with heat input control, welding of Al and Al-alloys with meso-spray metal transfer and $CO_2$ welding.

Telefon: (0 89) 4 70 60 55/56
Telex: 5 23016
Telegramm / cable:
Zetapatent® München

Postfach 80 13 69
Lucile-Grahn-Straße 38
D-8000 München 80

Hans-Jürgen Müller
Gerhard D. Schupfner
Hans-Peter Gauger
Patentanwälte
European Patent Attorneys
Mandataires en brevets européens

0148315

Pan, Zhang, Ou, and Wu
2856. PT-EP

C L A I M S

1. Method of controlling the output characteristic (U-I-characteristic) of a welding power source (12) in which the output characteristic comprises increasing and decreasing parts between an open circuit point (A) and a short circuit point (G) c h a r a c t e r i z e d   i n that the output characteristic is controlled in such a manner that it comprises multiple segments including a steeply increasing segment (BC, BC') in which the voltage steeply increases with increasing or decreasing current, a slightly increasing segment (CD) in which the voltage increases with increasing current and/or a substantially vertical segment (DE).

2. Method as claimed in claim 1 c h a r a c t e r i z e d   i n that the lower end (C) of the slightly increasing segment (CD) forms the lower end (C) of the steeply increasing segment (BC) and that the upper end (D) of the slightly increasing segment (CD) forms the upper end (D) of the substantially vertical segment (DE) and that the lower end (C) of the slightly increasing segment (CD) is preselected to comply with the upper threshold value of the arc length and the upper end (D) of the slightly increasing segment (CD) is preselected to comply with the lower threshold
value of the arc length.

3. Apparatus for arc welding comprising a welding power
source (12) and a wire feeding unit (13), the welding
power source comprising an output characteristic
control circuit (1) for controlling the output characteristic (U-I-characteristic with increasing and
decreasing parts) of the welding power source to be
electrically connected to the wire (11) and to the
part (9) to be welded, and the wire feeding unit (13)
comprising a wire feeding control circuit (5) for
controlling the wire feeding
c h a r a c t e r i z e d   t h e r e i n
that the output characteristic control circuit (1)
produces a multi-segmental output characteristic
with multiple segments (AB, BC, CD, DE, EF, FG) including of different slope between an open circuit
point (A) and a short circuit point (G)

4. Apparatus as claimed in claim 3,
c h a r a c t e r i z e d   t h e r e i n
that the output characteristic control circuit (1)
produces a movable output characteristic for automatically detecting the length of the welding arc
(8) and for automatically controlling the output
voltage (u) and the output current (i) according
to the fluctuation of the arc length and, therefore,
for automatically adapting.

5. Apparatus as claimed in claim 4,
·c h a r a c t e r i z e d   t h e r e i n
that the output characteristic control circuit (1)
produces a scanning action responding to a slight
increment and/or decrement of the arc current (i).

6. Apparatus as claimed in claim 4,
c h a r a c t e r i z e d   t h e r e i n
that the scanning action is triggered by upper
threshold value ($1_1$) and by the lower threshold
value ($1_2$) of the arc length or of the arc voltage
(u).

7. Apparatus as claimed in one of claims 3 - 6,
c h a r a c t e r i z e d   t h e r e i n
that the output characteristic control circuit (1)
produces a steeply increasing segment (BC) which
inclines slightly to the left (or to the right) with
the vertical for maintaining the arc (8) stable,
produces a slightly increasing segment (CD) in which
the arc voltage (u) increases with increasing arc
current (i) and/or produces a substantially vertical
segment (DE) for maintaining the pulse arc current
(i) constant.

8. Apparatus as claimed in one of claims 3 - 7,
c h a r a c t e r i z e d   t h e r e i n
that the output characteristic control circuit (1)
connects arbitrary numbers of segments with arbitrary and/or varying slope.

9. Electrical circuit of an apparatus of a welding
power source (12) as claimed in any of claims 3 - 8,
c h a r a c t e r i z e d   i n
that operational amplifiers (A101 - A109) comprises
feedback connections for obtaining linear segments
of the output characteristic.

10. Electrical circuit as claimed in claim 9,
c h a r a c t e r i z e d   t h e r e i n
that feedback controlled operational amplifiers
(A101 - A107) are connected to diodes (D1 - D5) in

- 4 -

0148315

such a manner that the output thereof is selectively
and alternatively connected to one of the amplifiers
(A101 - A107) in a multiplexer-like manner.

Fig. 1

Fig. 2

3/8

0148315

Fig. 3

Fig. 4

4/8

0148315

A103

A102

A109

A108

21

22

23

$i$

$u$

$R'_x$

$i_v$

Fig. 5

Fig. 6

Fig. 7

0148315

Fig.8

European Patent
Office

**EUROPEAN SEARCH REPORT**

0148315

Application number

EP 84 10 7840

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 961 154 (ELEKTRISKA SVETSNINGSAKTIEBOLAGET) <br> * Figures 6,6a; column 10, line 48 - end of column 12 * | 1,3 | B 23 K 9/09 |
| A | * Figure 5 * | 9 | |
| Y | | 10 | |
| | --- | | |
| X | DE-A-2 546 732 (OSAKA TRANSFORMER) <br> * Pages 30-31; figure 11 * | 1,3 | |
| | --- | | |
| Y | EP-A-0 095 056 (UNIVERSAL TIEFPUNKT) <br> * Abstract * | 10 | TECHNICAL FIELDS SEARCHED (Int. Cl.4) |
| | --- | | B 23 K 9/00 |
| D,A | EP-A-0 043 589 (MITSUBISHI) | | |
| | --- | | |
| A | US-A-3 809 853 (UNION CARBIDE) | | |
| | --- | | |
| A | US-A-4 410 788 (SUMMERS) | | |
| | ----- | | |

The present search report has been drawn up for all claims

| Place of search | Date of completion of the search | Examiner |
|---|---|---|
| THE HAGUE | 06-03-1985 | HOORNAERT W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82